Europäisches Patentamt

European Patent Office

Office européen des brevets

(11) Numéro de publication : **0 330 570 B1**

# FASCICULE DE BREVET EUROPEEN

(45) Date de publication du fascicule du brevet :
**06.05.92 Bulletin 92/19**

(51) Int. Cl.$^5$ : **B29C 65/00**, B42C 7/00,
B42D 3/00, A45C 13/00

(21) Numéro de dépôt : **89400499.3**

(22) Date de dépôt : **22.02.89**

(54) **Procédé d'assemblage bord à bord d'un matériau souple avec un matériau rigide, assemblage ainsi réalisé.**

(30) Priorité : **26.02.88 FR 8802409**

(43) Date de publication de la demande :
**30.08.89 Bulletin 89/35**

(45) Mention de la délivrance du brevet :
**06.05.92 Bulletin 92/19**

(84) Etats contractants désignés :
**DE ES GB IT**

(56) Documents cités :
**EP-A- 0 199 472**
**CH-A- 184 449**

(56) Documents cités :
**DE-A- 2 515 685**
**FR-A- 2 429 672**
**US-A- 4 575 123**
**US-A- 4 582 236**

(73) Titulaire : **PANODIA S.A.**
**Route de Romorantin**
**F-41210 Neung-sur-Beuvron (FR)**

(72) Inventeur : **Esnault, Gino**
**La Croix-Brunie**
**F-41210 Neung-sur-Beuvron (FR)**

(74) Mandataire : **Bugnon-Hays, Claudine**
**PATCO S.A. 10, rue Vivienne**
**F-75002 Paris (FR)**

EP 0 330 570 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé d'assemblage d'un matériau souple et d'un matériau rigide, ainsi qu'un assemblage obtenu par ce procédé.

On connaît dans l'état de la technique divers procédés d'assemblage bord à bord de matériaux de rigidité différente. Ce type d'assemblage se fait généralement par collage de l'envers d'une bande extérieure de l'un des matériaux sur l'endroit d'une bande extérieure de l'autre matériau, ou encore par couture de ces deux bandes.

Ce type d'assemblage pose quelques difficultés de positonnement au moment de la fabrication. L'aspect esthétique et solide pouvant être facilement mis en oeuvre par des machines semi-automatiques ou automatiques.

Le procédé d'assemblage selon la présente invention consiste à effectuer les étapes suivantes :

On marque le matériau souple avec une première ligne de pliage parallèle au bord d'assemblage délimitant une bande de raccordement, ainsi qu'avec une deuxième ligne de pliage correspondant à l'axe médian de ladite bande de raccordement délimitant une lèvre extérieure et une lèvre intérieure, on replie la lèvre extérieure sur la lèvre intérieure endroit contre endroit selon la deuxième ligne de pliage pour former une gouttière, on insère la bordure de raccordement du matériau rigide dans la gouttière ainsi formée et on la fixe, enfin on replie le matériau souple sur l'envers de la lèvre intérieure selon la première ligne de pliage.

La gouttière facilite la fabrication en permettant un calage en position du matériau rigide avant la fixation définitive. Par ailleurs, la finition obtenue lors de la mise en oeuvre de ce procédé d'assemblage est particulièrement satisfaisante, tant sur l'endroit que sur l'envers.

Selon un mode de réalisation préféré, la solidarisation des deux matériaux s'effectue par une couture.

Selon une autre variante, cette solidarisation s'effectue par collage ou par une soudure ultra-sons.

Ce dernier mode de fixation est particulièrement approprié lorsque le matériau rigide est constitué par une feuille de polypropylène d'une épaisseur de l'ordre de 12 dixièmes de millimètres et le matériau souple constitué par une feuille de polypropylène d'une épaisseur de l'ordre de 5 dixièmes de millimètres.

Les lignes de pliage sont rainurées. La mise en forme du matériau souple s'en trouve facilitée et le pli reste parfaitement marqué, même lorsque ledit matériau présente une certaine nervation ou élasticité.

La présente invention concerne également un assemblage bord à bord d'un matériau plan souple avec un matériau plan rigide, le matériau plan souple présentant des pliures de raccordement constituées par le repliement sur l'envers d'une bande de raccordement, ladite bande étant repliée elle-même vers l'endroit symétriquement par rapport à une ligne sensiblement médiane pour former une gouttière longitudinale ouverte vers l'extérieur, la bordure de raccordement du matériau rigide étant fixée dans ladite gouttière longitudinale.

Selon un mode de réalisation avantageux, les deux matériaux sont constitués en matière plastique telle que le polypropylène. Ce type de matériau permet une grande diversité d'effets esthétiques et présente des qualités de résistance mécanique particulièrement adaptées à la fabrication de nombreux articles.

Selon un mode de réalisation avantageux, une bande repliée enserre les bords de l'assemblage perpendiculaire à la ligne de jonction. Cette bande repliée a deux fonctions : d'une part, elle permet d'améliorer la finition de l'article mettant en oeuvre l'assemblage selon l'invention et, d'autre part, la bande repliée maintient l'assemblage en place et dissimule les épaisseurs multiples.

De tels assemblages peuvent être utilisés dans de nombreuses applications telles qu'une reliure constituée par deux feuilles rigides reliées par un dos souple.

Ce mode d'assemblage permet, notamment, d'obtenir une ouverture parfaitement plane de la reliure et de contrôler parfaitement la rigidité du dos.

Une autre application concerne la constitution d'une mallette formée par une boite rigide et un rabat rigide reliés par une bande charnière assemblée par un assemblage conforme à la présente invention.

D'autres avantages et modes de réalisation ressortiront mieux de la description gui va suivre s'appuyant sur les dessins où :

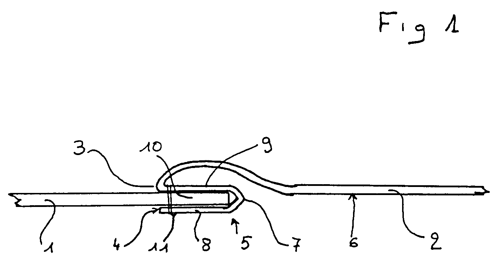

– la figure 1 représente une vue en coupe d'un assemblage selon la présente invention.

L'assemblage selon la présente invention, tel que réprésenté en figure 1, est destiné à relier un matériau rigide (1) à un matériau souple (2). Le matériau rigide plan (1) peut être constitué par une feuille de carton, de bois, de métal, de matière plastique ou tout autre matériau équivalent.

Le matériau souple (2) peut être constitué par du tissu, du cuir, une matière plastique ou tout autre matériau équivalent.

Selon un exemple de réalisation, le matériau rigide (1) est constitué par une feuille de polyprylène d'une épaisseur de 12 dixièmes de millimètres et le matériau souple (2) est constitué par une feuille de polypropylène d'une épaisseur de 5 dixièmes de millimètres.

Le matériau souple (2) est marqué avec une première ligne de pliage (3) parallèle au bord d'assemblage (4). Cette première ligne de pliage (3) délimite une bande de raccordement (5). Cette bande de raccordement est repliée sur l'envers (6) du matériau souple ou semi-rigide (2). Elle comporte une deuxième ligne de pliage (7), correspondant à l'axe médian de la bande de raccordement (5) du matériau souple.

Cette deuxième ligne de pliage (7) délimite une lèvre extérieure (8) et une lèvre intérieure (9). La lèvre extérieure (8) est repliée sur la lèvre intérieure (9) endroit contre endroit pour former une gouttière.

La bordure de raccordement (10) du matériau rigide est insérée dans ladite gouttière constituée par la lèvre extérieure (8) et la lèvre intérieure (9). Cette bordure de raccordement (10) est ensuite fixée par collage, soudure haute-fréquence ou ultra-sons ou encore par une couture (11) traversant la lèvre extérieure (9).

Les lignes de pliage (3) et (7) peuvent être prérainurées sur l'envers (6) du matériau souple (2).


**Revendications**

1. Procédé d'assemblage bord à bord d'un matériau plan souple (2) avec un matériau rigide (1) caractérisé en ce que :
   – on marque le matériau souple (2) avec une première ligne de pliage (3) parallèle au bord d'assemblage (4), délimitant une bande de raccordement, ainsi qu'avec une deuxième ligne de pliage (7) correspondant à l'axe médian de ladite bande de raccordement (5), délimitant une lèvre extérieure (8) et une lèvre intérieure (9),
   – on replie la lèvre extérieure (8) sur la lèvre intérieure (9), endroit contre endroit, selon la deuxième ligne de pliage (7) pour former une gouttière,
   – on insère la bordure de raccordement (10) du matériau rigide (1) dans la gouttière ainsi formée et on la fixe,
   – on replie le matériau souple (2) sur l'envers de la lèvre intérieure (9) selon la première ligne de pliage (3).

2. Procédé d'assemblage bord à bord selon la revendication 1 caractérisé en ce que la solidarisation du matériau rigide (1) et de la bande de raccordement (5) du matériau souple (2) s'effectue par une couture (11).

3. Procédé d'assemblage bord à bord selon la revendication 1, caractérisé en ce que la solidarisation du matériau rigide (1) et de la bande de raccordement (5) du matériau souple (2) s'effectue par un collage.

4. Procédé d'assemblage bord à bord selon la revendication 1 caractérisé en ce que la solidarisation du matériau rigide (1) et de la bande de raccordement (5) du matériau souple (2) s'effectue par une soudure ultra-sons.

5. Procédé d'assemblage bord à bord d'un matériau souple (2) avec un matériau rigide (1) selon l'une quelconque des revendications 1 à 4, caractérisé en ce que les lignes de pliage sont rainurées.

6. Assemblage bord à bord d'un matériau plan souple (2) avec un matériau plan rigide (1) caractérisé en ce que le matériau souple (2) présente des pliures de raccordement constituées par le repliement sur l'envers d'une bande de raccordement (5), ladite bande étant repliée elle-même vers l'endroit, symétriquement par rapport à une ligne (7) sensiblement médiane pour former une gouttière longitudinale ouverte vers l'extérieur, la bordure de raccordement (10) du matériau rigide (1) étant fixé dans ladite gouttière longitudinale.

7. Assemblage selon la revendication 6 caractérisé en ce que le matériau plan souple (2) et le matériau plan rigide (1) sont constitués en matière plastique telle que le polypropylène.

8. Assemblage selon l'une quelconque des revendications 6 ou 7 caractérisé en ce qu'une bande repliée enserre les bords de l'assemblage perpendiculaire à la ligne de jonction.

9. Assemblage selon l'une des revendications 6 à 8 caractérisé en ce que le matériau souple (2) et le matériau rigide (1) forment une reliure.

10. Assemblage selon l'une des revendications 6 à 8 caractérisé en ce qu'il est utilisé pour relier le rabat et la boîte constituant une mallette.


**Patentansprüche**

1. Verfahren zum Zusammenfügen eines ebenen biegsamen Materials Rand an Rand mit einem steifen Material (1), wobei :
   – das biegsame Material (2) mit einer ersten zum Verbindungsrand (4) parallel liegenden Linie (3) gekennzeichnet wird, was zur Abgrenzung eines Verbindungsbandes führt sowie mit einer zweiten Linie (7), die der Mittelachse des besagten Verbindungsbandes (5) entspricht, was zur Abgrenzung eines äußeren (8) und eines inneren Fugenrandes (9) führt,
   – der äußere Fugenrand (8) auf den inneren Fugenrand (9) entlang der zweiten Linie (7) - rechts auf rechts - geklappt wird. Hierdurch entsteht eine Faltenrinne,
   – der Verbindungsrand (10) des steifen Materials (1) in die so entstandene Faltenrinne eingeführt und dann befestigt wird,
   – das biegsame Material (2) entlang der ersten Linie (3) auf die linke Seite des inneren Fugenrandes (9) geklappt wird.

2. Verfahren zum Zusammenfügen eines biegsamen Materials Rand an Rand mit einem steifen Material gemäß des Patentanspruches 1, wobei die stoffschlüssige Verbindung des steifen Materials (1) mit dem Verbindungsband (5) des biegsamen Materials (2) in Form einer Naht (11) erfolgt.

3. Verfahren zum Zusammenfügen eines biegsamen Materials Rand an Rand mit einem steifen Material gemäß des Patentanspruches 1, wobei die stoffschlüssige Verbindung des steifen Materials (1) mit dem Verbindungsband (5) des biegsamen Materials (2) in Form einer Klebeverbindung erfolgt.

4. Verfahren zum Zusammenfügen eines biegsamen Materials Rand an Rand mit einem steifen Material gemäß des Patentanspruches 1, wobei die stoffschlüssige Verbindung des steifen Materials (1) mit dem Verbindungsband (5) des biegsamen Materials (2) in Form einer Ultraschall-Schweißnaht erfolgt.

5. Verfahren zum Zusammenfügen eines biegsamen Materials (2) Rand an Rand mit einem steifen Material (1) gemäß einer der vier (1 -4) Patentansprüche, wobei die Faltlinien gerillt sind.

6. Verbindung eines ebenen biegsamen Materials (2) Rand an Rand mit einem ebenen steifen Material (1), wobei das biegsame Material (2) Verbindungsfalten aufweist, die durch das Umklappen eines Verbindungsbandes (5) auf links entstanden sind; das besagte Band wird auf rechts geklappt und zwar symetrisch entlang einer Mittellinie (7). Hierdurch entsteht eine nach außen offene Längsrinne, wobei der Verbindungsrand (10) des steifen Materials (1) in der besagten Längsrinne befestigt ist.

7. Verbindung gemäß dem Patentanspruch 6, wobei das ebene biegsame Material (2) und das ebene steife Material (1) aus einem Kunststoff, z.B. Polypropylen, bestehen.

8. Verbindung gemäß des Patentanspruches 6 oder 7, wobei das umgeklappte Band die Verbindungsränder senkrecht zur Verbindunsstelle einspannt.

9. Verbindung gemäß des Patentanspruches 6 oder 8, wobei das biegsame Material (2) und das steife Material (1) einen Einband bilden.

10. Verbindung gemäß der Patentansprüche 6 bis 8, wobei diese dem Verbinden der Klappe mit dem kastenförmigen Teil eines Handkoffers dient.

**Claims**

1. Process for the edge to edge joining of a flexible material to a rigid material, characterized in that:
   – the flexible material (2) is marked with a first folding line (3) that is parallel to the joint edge (4) and that demarcates a joining strip, and with a second folding line (7) which corresponds to the middle axis of the said joining strip (5) and which demarcates an external lip (8) and an internal lip (9),
   – the external lip (8) is folded up on the internal lip (9), right side against right side, along the second folding line (7) in order to form a groove,
   – the joining edge (10) of the flexible material (1) is inserted into the groove thus formed and is fixed,
   – the flexible material (2) is folded up on the back of the internal lip (9) along the first folding line (3).

2. Process for the edge to edge joining according to claim 1 characterized in that the rigid material (1) is associated with the joining strip (5) of the flexible material (2) by means of sewing (11).

3. Process for the edge to edge joining according to claim 1, characterized in that the rigid material (1) is associated with the joining strip (5) of the flexible material (2) by means of glue.

4. Process for the edge to edge joining according to claim 1, characterized in that the rigid material (1) is associated with the joining strip (5) of the flexible material (2) by means of ultrasonic welding.

5. Process for the edge to edge joining of a flexible material (2) to a rigid material (1) according to any one of claims 1 to 4, characterized in that the folding lines are slotted.

6. Edge to edge joining of a flexible material (2) to a rigid material (1) characterized in that the flexible material (2) shows joining folds formed by folding a joining strip (5) on its back side, the said strip being folded on the right side symmetrically with respect to a roughly median line (7) in order to form a lengthwise groove opened on to the outside, the joining edge (10) of the rigid material (1) being fixed in the said lengthwise groove.

7. Joining according to claim 6 characterized in that the flexible material (2) and the rigid material (1) are made of plastic such as polypropylene.

8. Joining according to any one of claims 6 or 7 characterized in that a folded strip encloses the edges of joining perpendicularly to the joining line.

9. Joining according to any one of claims 6 to 8 characterized in that the flexible material (2) and the rigid material (1) form a binding.

10. Joining according to any one of claims 6 to 8 characterized in that it is used in order to bind the flap and the box that make up an attaché-case.

Fig 1